# EUROPÄISCHE PATENTSCHRIFT

(11) **EP 2 566 686 B1**
(45) Veröffentlichungstag und Bekanntmachung des Hinweises auf die Patenterteilung: **07.05.2014**
(21) Anmeldenummer: 11709085.2
(22) Anmeldetag: 09.03.2011
(51) Int. Cl.: B29D 30/24, B29D 30/30

(54) **VERFAHREN ZUM HERSTELLEN VON REIFENROHLINGEN AUF EINER REIFENAUFBAUTROMMEL**
PROCESS FOR PRODUCING GREEN TIRES ON A TIRE BUILDING DRUM
PROCÉDÉ DE FABRICATION DES PNEU CRU SUR UN TAMBOUR Â CONFECTIONNER

(30) Priorität: 05.05.2010 DE 102010016793
(43) Veröffentlichungstag der Anmeldung: 13.03.2013
(73) Patentinhaber: Continental Reifen Deutschland GmbH, 30165 Hannover (DE)
(72) Erfinder: SCHULZE, Norbert, 26427 Holtgast (DE)
(74) Vertreter: Widjaja, Wira
(86) Internationale Anmeldenummer: PCT/EP2011/053514
(87) Internationale Veröffentlichungsnummer: WO 2011/138068

(56) Entgegenhaltungen:
- WO-A1-2005/097478
- WO-A1-2009/142482
- US-A- 5 405 484

## Beschreibung

Die Erfindung betrifft ein Verfahren zum Herstellen von Reifenrohlingen auf einer Reifenaufbautrommel.

Bei der herkömmlichen Herstellung von Neureifen erfolgt ein Herstellungsschritt auf einer Reifenaufbautrommel, bei der die zunächst flach aufliegende Reifenkarkasse durch einen Expansionsvorgang bombiert wird. Der eigentliche Bombiervorgang der Karkasse erfolgt beispielsweise über einen Mittenbalg, der den mittleren Bereich der Karkasse expandiert. Anschließend werden bei diesem Vorgang die beiden äußeren Seitenwände an der bombierten Karkasse hochgeschlagen und dabei um die Wulstkerne gefaltet. Dieser Vorgang des Hochkrempelns der Reifenseitenwände erfolgt mit sogenannten Bombierköpfen.

Das Hochschlagen der Seitenwände mit Hilfe eines Rollenhebelsystems ist beispielsweise in der DE 199 34 791 C1 offenbart. Bei dieser Vorrichtung erfolgt das Auseinanderspreizen des Rollenhebelsystems über einen pneumatischen Antrieb, der aus zwei separaten Pneumatikzylindern besteht. Die beiden Pneumatikzylinder werden separat mit Druckluft beaufschlagt, wodurch das Reifenhebelsystem auseinanderspreizt und dadurch die Seitenwände an der Karkasse hochschlägt.

Die US 5 405 484 A, WO 2005/097479 A1 und WO 2009/142482 A1 offenbaren weitere bekannte Verfahren und Vorrichtungen zur Herstellung von Fahrzeugreifen.

Ein wesentlicher Nachteil bei diesem Prinzip besteht darin, dass beim Auflegen der Reifenaufbauteile auf die Reifenaufbautrommel, die Rollen der Rollenhebel eine ungleichmäßige Oberfläche darstellen. Nach dem Aufwickeln der Reifenaufbauteile auf die Reifenaufbautrommel, insbesondere der Reifeninnenseele mit den Reifenseitenteilen erfolgt ein Zusammenspleißen der gegenüberliegenden Enden der Materialbahn. Durch die unregelmäßige Oberfläche der Rollenhebel kann der Spleißvorgang in diesem Bereich nur unzureichend erfolgen. Eine mangelhafte Spleißverbindung der Reifenaufbauteile würde eine Qualitätseinbuße bei den herzustellenden Reifen bedeuten.

Es gibt bei den Karkasstrommeln Ansätze, die Rollenhebel der Rollenhebel effektiv abzudecken. Bei diesen Ansätzen besteht jedoch in Regel der Nachteil, dass dadurch die Maschinenkonstruktion komplizierter wird.

Der Erfindung liegt die Aufgabe zugrunde, ein Verfahren zum Herstellen von Reifenrohlingen auf einer Reifenaufbautrommel zu schaffen, mit dem eine hohe Fertigungsqualität der herzustellenden Fahrzeugreifen gewährleistet wird.

Außerdem sollen die Bewegungsabläufe bei der Herstellung der Reifenkarkasse möglichst einfach und zeitsparend sein.

Gelöst wird die Aufgabe gemäß Anspruchs 1 mit einem Verfahren mit folgenden Schritten:
a) Bilden einer vollständig geschlossenen zylindrischen Oberfläche mit einer Mittenunterstützung und zwei an die Mittenunterstützung anliegende Bombierköpfe, wobei zumindestens die Kernklemmnsegmente der Reifenaufbautrommel durch die Mittenunterstützung abgedeckt werden
b) Auflegen von Reifenaufbauteilen in Form von Materialbahnen auf die Reifenaufbautrommel,
   wobei mit den Reifenaufbauteilen eine Reifenkarkasse aufgebaut wird,
c) Zusammenspleissen des vorderen und hinteren Ende der Reifenaufbauteile auf der Reifenaufbautrommel, wobei die Mittenunterstützung mit den anliegenden Bombierköpfen eine geschlossene zylindrische Oberfläche zum optimalen Zusammenspleissen der Materialbahnen bildet,
d) Beide Bombierköpfe mit den Kernklemmsegmenten unter der schlauchförmigen Reifenkarkasse in axialer Richtung der Reifenaufbautrommel auseinanderfahren, wobei die beiden Kernklemmsegmente auf ein vorgegebenes Kemabstandsmaß verfahren werden,
e) Positionierung der Reifenkerne koaxial zur schlauchförmig auf der Reifenaufbautrommel aufgewickelten Reifenkarkasse,
f) Expandieren der Kernklemmsegmente, wodurch die Reifenkerne mit der Reifenkarkasse eingeklemmt werden,
g) Bombieren des Reifenrohlings mit den beiden Bombierköpfen, wobei ein Hochschlagen der Reifenseitenwände erfolgt und die Reifenseitenwände um den Reifenkern hochgeschlagen werden,
h) Fertigstellung des Reifenrohlings mit einem konventionellen Herstellverfahren.

Ein Vorteil der Erfindung ist insbesondere darin zu sehen, dass durch das Verfahren eine hohe Fertigungsqualität der herzustellenden Fahrzeugreifen gewährleistet wird. Durch die vollständig geschlossene zylindrische Oberfläche der Reifenaufbautrommel beim Zusammenspleißen der Materialbahn bzw. der Reifenaufbauteile wird im gesamten Bereich eine vollständig geschlossene glatte Oberfläche geschaffen. Auf dieser geschlossenen und glatten Oberfläche lässt sich der Spleißvorgang über die gesamte Breite der Materialbahn optimal durchführen. Der Materialspleiß der jeweiligen Materialbahn besitzt somit über seine gesamte Breite eine hohe Verbindungsqualität.

Ein weiterer wesentlicher Vorteil des erfindungsgemäßen Verfahrens besteht darin, dass ein einfacher Bewegungsablauf beim Herstellen der Reifenkarkasse erzielt wird. Durch diesen einfachen Bewegungsablauf wird die Taktzeit zur Herstellung einer Reifenkarkasse erheblich reduziert. Ein weiterer Vorteil besteht darin, dass beim Aufwickeln der Karkasse auf der Reifenaufbautrommel die jeweiligen Teilbereiche des Werkzeuges, insbesondere die Bombierköpfe, unabhängig von der jeweiligen Reifenspezifikation an einer festen Stelle positioniert sind. Diese Reifenspezifikation kann beispielsweise unterschiedliche Breiten und Höhen umfassen. Die beiden Bombierköpfe liegen beim Aufwickeln der Karkasse immer direkt an der Mittenunterstützung an. Dadurch muss bei einer Änderung der Reifenspezifikation die Mittenunterstützung nicht ausgewechselt werden. Dadurch sind keine Umrüstzeiten an der Reifenaufbautrommel erforderlich, wenn die Reifenspezifikation geändert wird.

In einer vorteilhaften Weiterbildung der Erfindung ist vorgesehen, dass die Bombierköpfe eine Vielzahl von Rollenhebeln zum Hochschlagen der Reifenseitenwände umfassen.

Mit den Rollenhebeln lassen sich die Seitenwände mit einer relativ hohen Geschwindigkeit hochschlagen. Außerdem erfolgt in allen Positionen ein gleichmäßiger Anpressdruck auf die Reifenseitenwand.

In einer weiteren vorteilhaften Weiterbildung der Erfindung ist vorgesehen, dass bei Schritt g) das Hochschlagen der Reifenseitenwände durch ein symmetrisches Auseinanderspreizen der Rollenhebel erfolgt.

Durch das symmetrische und gleichmäßige Auseinanderspreizen der Rollenhebel werden Lufteinschlüsse zwischen den Materiallagen vermieden.

In einer weiteren vorteilhaften Weiterbildung der Erfindung ist vorgesehen, dass die Rollen der Rollenhebel bei Schritt a) bis c) vollständig durch die Mittenunterstützung abgedeckt werden.

Die Rollen der Rollenhebel liegen bei den Schritten a) bis c) in entsprechenden Hohlräumen unterhalb der Mittenunterstützung. Dadurch wird auf einer einfachen Weise eine vollständig geschlossene zylindrische Oberfläche der Reifenaufbautrommel erreicht, wodurch eine optimale Spleißqualität erzeugt werden kann.

In einer weiteren vorteilhaften Weiterbildung der Erfindung ist vorgesehen, dass die Segmentaußenseiten der einzelnen Rollenhebel bei Schritt a) bis c) eine im Wesentlichen geschlossene zylindrische Oberfläche bilden.

Die geschlossene zylindrische Oberfläche ist insbesondere beim Aufwickeln der Reifenkarkasse von Vorteil. Außerdem gewährleistet die geschlossene Oberfläche eine optimale Spleißqualität.

In einer weiteren vorteilhaften Weiterbildung der Erfindung ist vorgesehen, dass die Segmentaußenseiten eine Antihaft-Beschichtung gegenüber Gummimaterialien aufweisen. Nach dem Zusammenspleißen der gegenüberliegenden Enden der entsprechenden Materialbahn werden die Bombierköpfe in axialer Richtung unter der Karkasse auseinander verfahren. Durch die Antihaftbeschichtung wird unterbunden, dass die aufliegende Materialbahn durch Scherkräfte mit bewegt und dadurch verformt wird.

In einer weiteren vorteilhaften Weiterbildung der Erfindung ist vorgesehen, dass die Rollenhebel aus Stahl oder Aluminium bestehen.

Diesen beiden Materialien lassen sich einfach mit einer Antihaftbeschichtung versehen.

In einer weiteren vorteilhaften Weiterbildung der Erfindung ist vorgesehen, dass an einem einzelnen Rollenhebel jeweils zwei einzelne Rollen angeordnet sind.

Dadurch wird eine gleichmäßige Druckkraft auf die Reifenseitenwand aufgebracht. Die gleichmäßige Druckkraft gewährleistet eine gute Materialverbindung beim Hochschlagen der Reifenseitenwände.

In einer weiteren vorteilhaften Weiterbildung der Erfindung ist vorgesehen, dass die Bombierköpfe jeweils einen Blähbalg zum Hochschlagen der Reifenseitenwände umfassen. Das Hochschlagen der Reifenseitenwände könnte statt mit den Rollenhebeln auch mit Bombierköpfen erfolgen, bei denen sogenannte Blähbälge vorgesehen sind. Diese Blähbälge sind ringförmig am Bombierkopf angeordnet und werden mit Druckluft in radialer Richtung aufgebläht. Bei diesem Blähvorgang werden die Reifenseitenwände, die an den Blähbälgen anliegen, um den Reifenkern geschlagen und an der Reifenseitenwand hochgeschlagen. Bei diesem Verfahren würden die Bombierköpfe mit den Blähbälgen ebenfalls bei den Schritten a) bis c) direkt an der Mittenunterstützung der Reifenaufbautrommel anliegen.

In einer weiteren vorteilhaften Weiterbildung der Erfindung ist vorgesehen, dass die Außenseiten der Blähbälge eine Antihaft-Beschichtung gegenüber Gummimaterialien aufweisen.

Nach dem Zusammenspleißen der gegenüberliegenden Enden der entsprechenden Materialbahn werden die Bombierköpfe in axialer Richtung unter der Karkasse auseinander verfahren. Durch die Antihaftbeschichtung wird unterbunden, dass die aufliegende Materialbahn durch Scherkräfte mit bewegt und dadurch verformt wird.

Anhand eines Ausführungsbeispiels soll die Erfindung näher erläutert werden. Es zeigen:

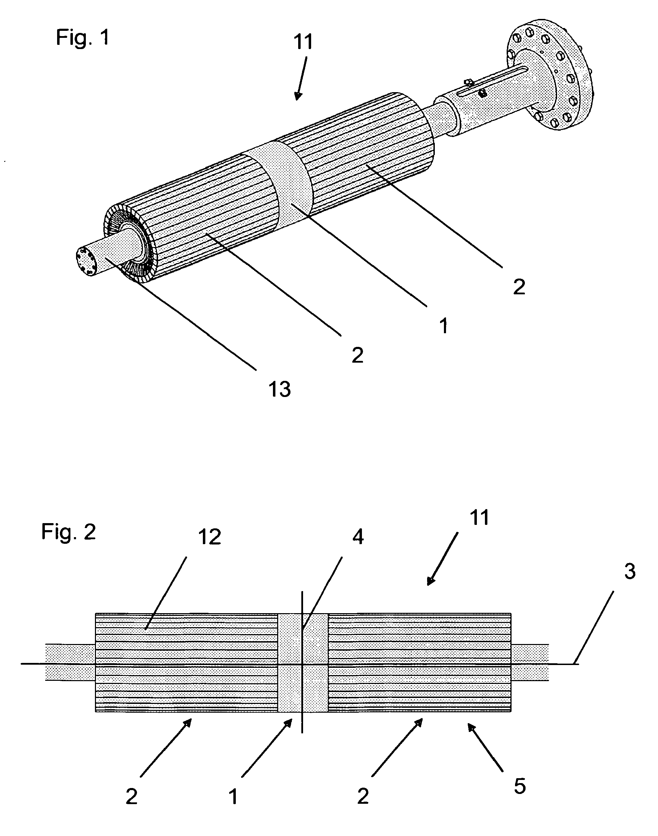

Fig. 1 bis Fig. 6: unterschiedliche Schritte des erfindungsgemäßen Verfahrens.

Die Figur 1 zeigt eine perspektivische Darstellung der Reifenaufbautrommel 11. Die Reifenaufbautrommel 11 ist im Wesentlichen achsensymmetrisch zur Trommelachse und zur Trommelmitte aufgebaut. Bei der Reifenaufbautrommel 11 handelt es sich um eine sogenannte Karkasstrommel, mit der eine Reifenkarkasse aufgebaut wird. Die Reifenaufbautrommel 11 setzt sich im Wesentlichen aus der Mittenunterstützung 1 und den auf beiden Seiten anliegenden Bombierköpfen 2 zusammen. Diese Bauteile sind an der drehbar gelagerten Trommelwelle 13 angeordnet.

In der Fig. 1 ist der Verfahrensschritt dargestellt, bei dem die Rollen der Rollenhebel durch die Mittenunterstützung 1 vollständig abgedeckt sind. Die Mittenunterstützung 1 besteht aus einem vollständig geschlossenen zylindrischen Hohlkörper. Nachdem die Reifenaufbauteile mit der Reifenseitenwand auf die Reifenaufbautrommel 11 aufgewickelt sind, erfolgt der Spleißvorgang der gegenüberliegenden Enden. Aufgrund der vollständig geschlossenen Oberfläche der Mittenunterstützung 1 kann der Materialspleiß mit einer hohen Qualität ausgeführt werden.

Die Figur 2 zeigt im Wesentlichen den gleichen Verfahrensschritt wie in der Figur 1, wobei in dieser Figur eine zweidimensionale Seitenansicht gezeigt wird. Bei diesem Verfahrensschritt befindet sich die Reifentrommel 11 in einem eingefallenen Zustand, wobei durch die Mittenunterstützung 1 und den beiden anliegenden Bombierköpfen 2 eine vollständig geschlossene zylindrische Oberfläche gebildet wird. Die Bombierköpfe 2 werden durch eine Vielzahl von Rollenhebeln 5 gebildet, wobei in dieser Figur lediglich die Segmentaußenseite 12 der Rollenhebel zu sehen ist.

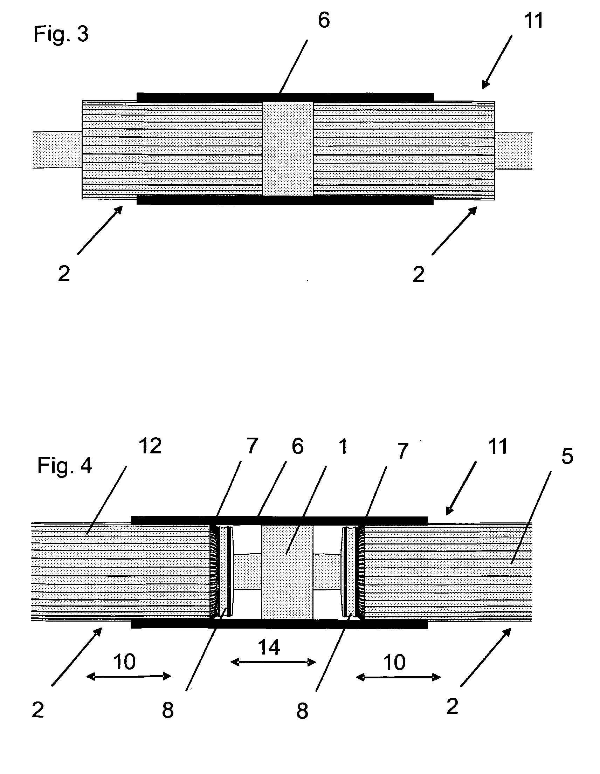

Die Figur 3 zeigt den Verfahrensschritt, bei dem die Reifenkarkasse auf der Reifenaufbautrommel bzw. Karkasstrommel 11 aufgewickelt wird. Die Reifenkarkasse 6, die zu mindestens aus der Reifeninnenseele und den beiden äußeren anliegenden Reifenseitenwänden besteht, wird über eine Rotation der Reifenaufbautrommel 11 auf die Trommel aufgewickelt. Anschließend werden die beiden gegenüber liegenden Enden der Materialbahnen zusammengespleißt.

Die Figur 4 zeigt den Verfahrensschritt, bei dem die beiden Bombierköpfe 2 in axialer Richtung 10 der Reifenaufbautrommel 11 auseinander gefahren werden. Die beiden Bombierköpfe 2 werden dabei unterhalb der schlauchförmigen Reifenkarkasse 6 verfahren, wobei bei diesem Vorgang die Kernklemmsegmente 8 und die Rollen 7 der Rollenhebel 5 freigelegt werden. Sowohl die Kernspannvorrichtung bzw. das Kernklemmsegment 8 als auch die Rollen 7 waren bei einem Verfahrensschritt zuvor vollständig durch die Mittenunterstützung 1 abgedeckt. In der Figur ist der Verfahrensschritt dargestellt, bei dem die Kernklemmsegmente auf ein vorgegebenes Kernabstandsmaß verfahren worden sind. Dieses Kernabstandsmaß 14 gibt den Abstand in axialer Richtung 10 wieder, bei dem die Wulstkerne auf die Reifenkarkasse 6 gesetzt werden. Dieses Kernabstandsmaß ist von der jeweiligen Reifenspezifikation abhängig, also insbesondere von der jeweiligen Zollgröße des herzustellenden Reifens. Die Segmentaußenseiten 12 sind mit einer besonderen Antihaftbeschichtung versehen, damit die Reibung zur aufliegenden Reifenkarkasse 6 möglichst gering ist.

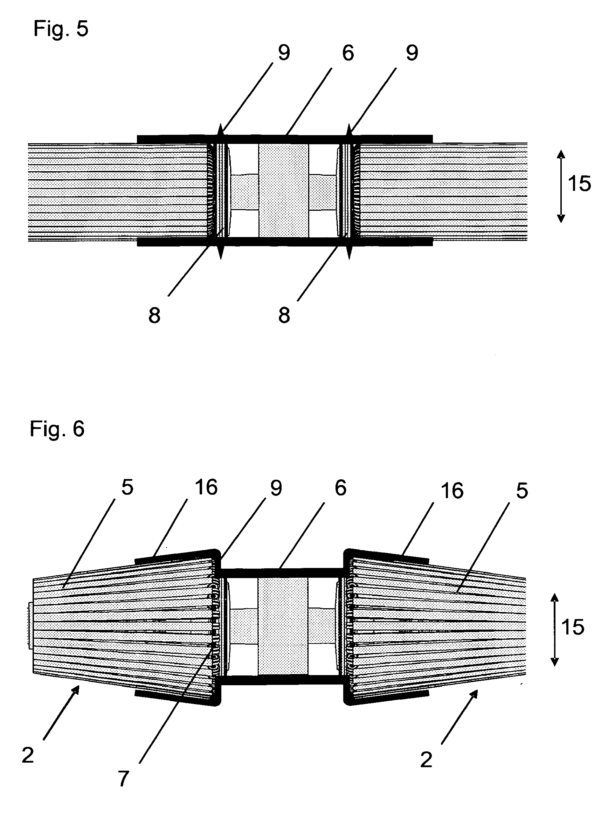

Die Figur 5 zeigt den Verfahrensschritt, bei dem die Wulstkerne 9 mit dem jeweiligen Apex auf der Reifenkarkasse 6 positioniert werden. Die Wulstkerne 9 werden direkt an der Position auf die Reifenkarkasse 6 positioniert, wo sich die Kernklemmsegmente 8 befinden. Anschließend werden die Kernklemmsegmente 8 in radialer Richtung 15 auseinander gefahren und dadurch die Wulstkerne 9 eingeklemmt.

Die Figur 6 zeigt den Verfahrensschritt, bei dem die einzelnen Rollenhebel 5 symmetrisch in radialer Richtung 15 auseinanderspreizen. Bei diesem Vorgang wird die Seitenwand 16 um den Reifenkern 9 herumgeschlagen und entsprechend hochgearbeitet. In einem weiteren nicht dargestellten Verfahrensschritt erfolgt die Fertigstellung nach einem herkömmlichen Verfahren. Dabei wird die Reifenkarkasse 6 bombiert und die Reifenseitenwände 16 mit den Rollenhebeln 5 an der Karkasse 6 hochgeschlagen. Es ist ebenfalls denkbar, die Bombierköpfe 2 statt mit Rollenhebeln 5 mit entsprechenden Blähbälgen zu versehen. In diesem Fall würde das Hochschlagen der Seitenwände mit den Blähbälgen erfolgen.

Das Hebelsystem für die Rollenhebel 5 besteht aus einer Vielzahl von um die Trommelachse 3 angeordneten Rollenhebeln 5, die jeweils mit dem Hebeltragkörper drehbar verbunden sind. Beim Verfahren des Hebeltragkörpers in Richtung zur Trommelmitte 4 spreizen sich die einzelnen Rollenhebel auseinander und schlagen auf diese Weise die Seitenwand 16 an der bereits bombierten Karkasse hoch.

Die am Rollenhebel 5 gelagerte Rolle 7 drückt bei diesem Vorgang die Seitenwand 16 gegen die Außenseite der Karkasse 6 und verbindet dadurch beide Lagen miteinander.

### Bezugszeichenliste

- 1: Mittenunterstützung
- 2: Bombierköpfe
- 3: Trommelachse
- 4: Trommelmitte
- 5: Rollenhebel
- 6: Karkasse bzw. Reifenkarkasse
- 7: Rolle
- 8: Kernspannvorrichtung bzw. Kernklemmsegmente
- 9: Wulstkern bzw. Reifenkern mit Apex
- 10: axiale Richtung
- 11: Reifenaufbautrommel bzw. Karkasstrommel
- 12: Segmentaußenseite der Rollenhebel
- 13: Trommelwelle
- 14: Kemabstandsmaß
- 15: radiale Richtung
- 16: Seitenwand

## Patentansprüche

1. Verfahren zum Herstellen von Reifenrohlingen auf einer Reifenaufbautrommel mit folgenden Schritten:
a) Bilden einer vollständig geschlossenen zylindrischen Oberfläche mit einer Mittenunterstützung (1) und zwei an die Mittenunterstützung (1) anliegende Bombierköpfe (2), wobei zumindest die Kernklemmsegmente (8) der Reifenaufbautrommel (11) durch die Mittenunterstützung (1) abgedeckt werden
b) Auflegen von Reifenaufbauteilen in Form von Materialbahnen auf die Reifenaufbautrommel (11),
wobei mit den Reifenaufbauteilen eine Reifenkarkasse (6) aufgebaut wird,
c) Zusammenspleissen des vorderen und hinteren Ende der Reifenaufbauteile auf der Reifenaufbautrommel (11), wobei die Mittenunterstützung (1) mit den anliegenden Bombierköpfen (2) eine geschlossene zylindrische Oberfläche zum optimalen Zusammenspleissen der Materialbahnen bildet,
d) Beide Bombierköpfe (2) mit den Kernklemmsegmenten (8) unter der schlauchförmigen Reifenkarkasse (6) in axialer Richtung (10) der Reifenaufbautrommel (11) auseinanderfahren,
wobei die beiden Kernklemmsegmente (8) auf ein vorgegebenes Kemabstandsmaß (14) verfahren werden,
e) Positionierung der Reifenkerne (9) koaxial zur schlauchförmig auf der Reifenaufbautrommel (11) aufgewickelten Reifenkarkasse (6),
f) Expandieren der Kernklemmsegmente (8), wodurch die Reifenkerne (9) mit der Reifenkarkasse (6) eingeklemmt werden,
g) Bombieren des Reifenrohlings mit den beiden Bombierköpfen (2), wobei ein Hochschlagen der Reifenseitenwände (16)erfolgt und die Reifenseitenwände um den Reifenkern (9) hochgeschlagen werden,
h) Fertigstellung des Reifenrohlings mit einem konventionellen Herstellverfahren.

2. Verfahren nach Anspruch 1,
**dadurch gekennzeichnet, dass**
die Bombierköpfe (2) eine Vielzahl von Rollenhebeln (5) zum Hochschlagen der Reifenseitenwände (16) umfassen.

3. Verfahren nach einem der vorhergehenden Ansprüche,
**dadurch gekennzeichnet, dass**
bei Schritt g) das Hochschlagen der Reifenseitenwände (16) durch ein symmetrisches Auseinanderspreizen der Rollenhebel (5) erfolgt.

4. Verfahren nach einem der vorhergehenden Ansprüche,
**dadurch gekennzeichnet, dass**
die Rollen (9) der Rollenhebel (5) bei Schritt a) bis c) vollständig durch die Mittenunterstützung (1) abgedeckt werden.

5. Verfahren nach einem der vorhergehenden Ansprüche,
**dadurch gekennzeichnet, dass**
die Segmentaußenseiten (12) der einzelnen Rollenhebel (5) bei Schritt a) bis c) eine im Wesentlichen geschlossene zylindrische Oberfläche bilden.

6. Verfahren nach einem der vorhergehenden Ansprüche,
**dadurch gekennzeichnet, dass**
die Segmentaußenseiten (12) eine Antihaft-Beschichtung gegenüber Gummimaterialien aufweisen.

7. Verfahren nach einem der vorhergehenden Ansprüche,
**dadurch gekennzeichnet, dass**
die Rollenhebel (5) aus Stahl oder Aluminium bestehen.

8. Verfahren nach einem der vorhergehenden Ansprüche,
**dadurch gekennzeichnet, dass**
an einem einzelnen Rollenhebel (5) jeweils zwei einzelne Rollen (7) angeordnet sind.

9. Verfahren nach einem der vorhergehenden Ansprüche,
**dadurch gekennzeichnet, dass**
die Bombierköpfe (2) jeweils einen Blähbalg zum Hochschlagen der Reifenseitenwände (16) umfassen.

10. Verfahren nach einem der vorhergehenden Ansprüche,
**dadurch gekennzeichnet, dass**
die Außenseiten der Blähbälge eine Antihaft-Beschichtung gegenüber Gummimaterialien aufweisen.

## Claims

1. Method for producing green tyres on a tyre building drum, having the following steps:
a) forming a completely closed cylindrical surface with a centre support (1) and two cambering heads (2) abutting against the centre support (1), wherein at least the core clamping segments (8) of the tyre building drum (11) are covered by the centre support (1),
b) laying tyre structure parts in the form of material webs onto the tyre building drum (11),
wherein a tyre carcass (6) is constructed by means of the tyre structure parts,
c) splicing together the front and rear ends of the tyre structure parts on the tyre building drum (11), wherein the centre support (1) forms, together with the abutting cambering heads (2), a closed cylindrical surface for optimum splicingtogether of the material webs,
d) moving the two cambering heads (2) with the core clamping segments (8) apart in the axial direction (10) of the tyre building drum (11) under the tubular tyre carcass (6),
wherein the two core clamping segments (8) are moved to a predefined core spacing (14),
e) positioning the tyre cores (9) coaxially with respect to the tyre carcass (6) which is wound in tubular form on the tyre building drum (11),
f) expanding the core clamping segments (8), whereby the tyre cores (9) are clamped to the tyre carcass (6),
g) cambering the green tyre by means of the two cambering heads (2), wherein the tyre side walls (16) are turned up and the tyre side walls are turned up about the tyre core (9),
h) completing the green tyre by means of a conventional production method.

2. Method according to Claim 1,
**characterized in that**
the cambering heads (2) have a multiplicity of roller levers (5) for the turning-up of the tyre side walls (16).

3. Method according to one of the preceding claims,
**characterized in that**,
in step g), the turning-up of the tyre side walls (16) is performed by means of symmetrical spreading of the roller levers (5).

4. Method according to one of the preceding claims,
**characterized in that**,
in steps a) to c), the rollers (9) of the roller levers (5) are entirely covered by the centre support (1).

5. Method according to one of the preceding claims,
**characterized in that**,
in steps a) to c), the segment outer sides (12) of the individual roller levers (5) form a substantially closed cylindrical surface.

6. Method according to one of the preceding claims,
**characterized in that**
the segment outer sides (12) have a coating that exhibits anti-stick properties with respect to rubber materials.

7. Method according to one of the preceding claims,
**characterized in that**
the roller levers (5) are composed of steel or aluminium.

8. Method according to one of the preceding claims,
**characterized in that**
two individual rollers (7) are arranged on each individual roller lever (5).

9. Method according to one of the preceding claims,
**characterized in that**
the cambering heads (2) each comprise an inflatable bellows for the turning-up of the tyre side walls (16).

10. Method according to one of the preceding claims,
**characterized in that**
the outer sides of the inflatable bellows have a coating that exhibits anti-stick properties with respect to rubber materials.

## Revendications

1. Procédé de fabrication de pneus crus sur un tambour de montage de pneus, comprenant les étapes suivantes :
a) formation d'une surface cylindrique complètement fermée avec un support central (1) et deux têtes de cintrage (2) s'appliquant contre le support central (1), au moins les segments de serrage de la tringle (8) du tambour de montage de pneus (11) étant recouverts par le support central (1)
b) application de pièces de montage de pneu sous forme de bandes de matériaux sur le tambour de montage de pneus (11),
une carcasse du pneu (6) étant réalisée avec les pièces de montage de pneu,
c) épissage de l'extrémité avant et de l'extrémité arrière des pièces de montage de pneu sur le tambour de montage de pneus (11), le support central (1) formant avec les têtes de cintrage appliquées (2) une surface cylindrique fermée en vue d'un épissage optimal des bandes de matériaux,
d) écartement l'une de l'autre des deux têtes de cintrage (2) avec les segments de serrage de la tringle (8) sous la carcasse du pneu de forme tubulaire (6) dans la direction axiale (10) du tambour de montage de pneus (11),
les deux segments de serrage de la tringle (8) étant déplacés à une distance prédéfinie de la tringle (14),
e) positionnement des tringles du pneu (9) coaxialement à la carcasse du pneu (6) enroulée sous forme tubulaire sur le tambour de montage de pneus (11),
f) expansion des segments de serrage de la tringle (8), de sorte que les tringles du pneu (9) soient serrées avec la carcasse du pneu (6),
g) cintrage du pneu cru avec les deux têtes de cintrage (2), un relèvement des parois latérales du pneu (16) se produisant et les parois latérales du pneu étant relevées autour de la tringle du pneu (9),
h) fabrication du pneu cru avec un procédé de fabrication conventionnel.

2. Procédé selon la revendication 1,
**caractérisé en ce que**
les têtes de cintrage (2) comprennent une pluralité de leviers à rouleaux (5) pour le relèvement des parois latérales du pneu (16).

3. Procédé selon l'une quelconque des revendications précédentes,
**caractérisé en ce que**
lors de l'étape g), le relèvement des parois latérales du pneu (16) s'effectue par un écartement symétrique des leviers à rouleaux (5).

4. Procédé selon l'une quelconque des revendications précédentes,
**caractérisé en ce que**
les rouleaux (9) des leviers à rouleaux (5) sont complètement recouverts par le support central (1) dans les étapes a) à c).

5. Procédé selon l'une quelconque des revendications précédentes,
**caractérisé en ce que**
les côtés extérieurs des segments (12) des leviers à rouleaux individuels (5) dans les étapes a) à c) forment une surface cylindrique essentiellement fermée.

6. Procédé selon l'une quelconque des revendications précédentes,
**caractérisé en ce que**
les côtés extérieurs des segments (12) présentent un revêtement antiadhésif vis-à-vis des matériaux à base de caoutchouc.

7. Procédé selon l'une quelconque des revendications précédentes,
**caractérisé en ce que**
les leviers à rouleaux (5) se composent d'acier ou d'aluminium.

8. Procédé selon l'une quelconque des revendications précédentes,
**caractérisé en ce que**
deux rouleaux individuels (7) sont chaque fois disposés au niveau d'un levier à rouleaux individuel (5).

9. Procédé selon l'une quelconque des revendications précédentes,
**caractérisé en ce que**
les têtes de cintrage (2) comprennent à chaque fois un soufflet de gonflage pour relever les parois latérales du pneu (16).

10. Procédé selon l'une quelconque des revendications précédentes,
**caractérisé en ce que**
les côtés extérieurs des soufflets de gonflage présentent un revêtement antiadhésif vis-à-vis des matériaux à base de caoutchouc.
